(19) **Europäisches Patentamt / European Patent Office / Office européen des brevets**

(11) **EP 1 713 645 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**03.01.2024 Patentblatt 2024/01**

(45) Hinweis auf die Patenterteilung:
**30.04.2014 Patentblatt 2014/18**

(21) Anmeldenummer: **05701144.7**

(22) Anmeldetag: **24.01.2005**

(51) Internationale Patentklassifikation (IPC):
**B42D 15/00** (2006.01)  **G02B 5/18** (2006.01)
**G07D 7/00** (2016.01)

(52) Gemeinsame Patentklassifikation (CPC):
**G02B 5/1819; B42D 25/29; G02B 5/1823; G02B 5/1828; G02B 5/1861; G07D 7/0032;** B42D 2035/14; B42D 2035/16; B42D 2035/20

(86) Internationale Anmeldenummer:
**PCT/EP2005/000659**

(87) Internationale Veröffentlichungsnummer:
**WO 2005/071444 (04.08.2005 Gazette 2005/31)**

(54) **GITTERBILD MIT MEHREREN VARIIERTEN GITTERFELDERN**

GRID IMAGE WITH SEVERAL GRID FIELDS

GRILLE-IMAGE COMPRENANT PLUSIEURS CHAMPS DE GRILLE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **26.01.2004 DE 102004003984**

(43) Veröffentlichungstag der Anmeldung:
**25.10.2006 Patentblatt 2006/43**

(73) Patentinhaber: **Giesecke+Devrient Currency Technology GmbH**
**81677 München (DE)**

(72) Erfinder: **DICHTL, Marius**
**81371 München (DE)**

(74) Vertreter: **Zeuner Summerer Stütz Patent- und Rechtsanwälte Partnerschaft Nußbaumstraße 8 80336 München (DE)**

(56) Entgegenhaltungen:
| | |
|---|---|
| EP-A- 0 012 375 | EP-A- 0 536 625 |
| EP-A- 0 758 587 | EP-A- 0 766 103 |
| EP-A1- 0 330 738 | EP-A1- 0 360 969 |
| EP-A1- 0 366 858 | EP-B1- 0 012 375 |
| WO-A-94/14621 | WO-A-94/18609 |
| WO-A-99/59036 | WO-A1-00/02067 |
| WO-A1-01/80175 | WO-A1-97/19821 |
| WO-A1-99/38039 | WO-A1-03/055691 |
| WO-A1-03/095227 | WO-A1-03/095228 |
| WO-A1-03/107047 | WO-A2-03/084765 |
| WO-A2-03/095657 | DE-A- 3 130 182 |

| | |
|---|---|
| DE-A- 10 226 115 | DE-A1- 10 148 122 |
| DE-A1- 10 206 357 | DE-A1- 10 243 413 |
| GB-A- 2 136 352 | GB-A- 2 205 529 |
| US-A- 5 003 600 | US-A- 5 629 070 |
| US-A- 6 088 161 | US-A1- 2001 043 396 |
| US-A1- 2003 224 164 | |

- du Bois, H. und Rubens, H : ..Polarisation ungebeugter langwelliger Wärmestrahlen durch Drahtgitter", Annalen der Physik, Vol. 340, Nr. 7, S. 243-276, 1911
- Bragg, W. H. und Bragg. W. L.: ?The Reflection of X-rays by Crystals",Proceedings of the Royal Society of London A: Mathematical, Physical and Engineering Sciences, Vol. 88, Nr. 605, S. 428-438, 1913
- Kassing, R , Käsmaier, R. und Rangelow, I. W.: ..Lithographie der nächsten Generation?,Physikalische Blätter, Vol. 56, Nr. 2, 2000
- Ibn-Elhaj, Mohammed et al, ?Optical polymer thin films with isotropic and anisotropic nano-corrugated surface topologies?; Nature Vol 410, 12 April 2001; Seiten 796-799
- Schilling, Andreas, ?Achromatic Features for Optically Variable Devices"; Proc. SPIE -4677, Optical Security Counterfeit Deterrence Techniques IV, 18 April 2002

**Beschreibung**

Die Erfindung betrifft ein Gitterbild mit mehreren Gitterfeldern, die jeweils ein elektromagnetische Strahlung beeinflussendes Gittermuster aus einer Vielzahl von Strichgitterlinien enthalten, wobei die Strichgitterlinien durch die Parameter Orientierung, Krümmung, Beabstandung und Profilierung charakterisiert sind. Die Erfindung betrifft ferner ein Verfahren zum Herstellen eines solchen Gitterbildes sowie ein Sicherheitselement, ein Sicherheitspapier und einen Datenträger mit einem solchen Gitterbild.

Zur Echtheitsabsicherung von Kreditkarten, Banknoten und anderen Wertdokumenten werden seit einigen Jahren Hologramme, holographische Gitterbilder oder andere hologrammartige Beugungsstrukturen eingesetzt. Im Allgemeinen werden im Banknoten- und Sicherheitsbereich holographische Beugungsstrukturen verwendet, die sich durch Prägung von holographisch erzeugten Gitterbildern in thermoplastisch verformbare Kunststoffe oder UV-härtbare Lacke auf Foliensubstraten herstellen lassen.

Echte Hologramme entstehen durch Beleuchtung eines Objekts mit kohärentem Laserlicht und Überlagerung des von dem Objekt gestreuten Laserlichts mit einem unbeeinflussten Referenzstrahl in einer lichtempfindlichen Schicht. So genannte holographische Beugungsgitter erhält man, wenn die in der lichtempfindlichen Schicht überlagerten Lichtstrahlen aus räumlich ausgedehnten, einheitlichen kohärenten Wellenfeldern bestehen. Durch die Einwirkung der überlagerten Wellenfelder auf die lichtempfindliche Schicht, beispielsweise einen photographischen Film oder eine Photoresistschicht, entsteht dort ein holographisches Beugungsgitter, das in Form heller und dunkler Linien in einem photographischen Film oder in Form von Bergen und Tälern in einer Photoresistschicht konserviert werden kann. Da die Lichtstrahlen in diesem Fall nicht durch ein Objekt gestreut worden sind, erzeugt das holographische Beugungsgitter lediglich einen optisch variablen Farbeindruck, jedoch keine Bilddarstellung.

Aus holographischen Beugungsgittern lassen sich holographische Gitterbilder erzeugen, indem nicht die gesamte Fläche des lichtempfindlichen Materials mit einem einheitlichen holographischen Beugungsgitter belegt wird, sondern indem geeignete Masken verwendet werden, um jeweils nur Teile der Aufnahmefläche mit einem von mehreren verschiedenen einheitlichen Gittermustern zu belegen. Ein solches holographisches Gitterbild setzt sich somit aus mehreren Gitterfeldern mit unterschiedlichen Beugungsgittermustern zusammen, die in der Regel nebeneinander in flächiger, streifenförmiger oder pixelartiger Ausführung liegen. Durch geeignete Anordnung der Gitterfelder lässt sich mit einem derartigen holographischen Gitterbild eine Vielzahl unterschiedlicher Bildmotive darstellen. Die Beugungsgittermuster können nicht nur durch direkte oder indirekte optische Überlagerung kohärenter Laserstrahlen, sondern auch mittels Elektronenlithographie hergestellt werden. Häufig wird eine Musterbeugungsstruktur erzeugt, die anschließend in eine Reliefstruktur umgesetzt wird. Diese Reliefstruktur kann als Prägewerkzeug verwendet werden.

Aus der Druckschrift DE 102 26 115 A1 die ein Gitterbild und ein Verfahren zum Herstellen eines Gitterbilds nach dem Oberbegriff der Ansprüche 1 und 11 betrifft, sind Gitterbilder bekannt, die nicht aus einzelnen Pixeln oder Streifen zusammengesetzt sind, sondern bei denen große, mit bloßem Auge erkennbare Gitterfelder mit einem einheitlichen Gittermuster belegt sind. Da unbelichtete Leerräume vermieden werden und nur wenige diskontinuierliche Übergänge zwischen den großflächigen Gitterfeldern vorliegen, wird so eine hohe Lichtintensität der Gitterbilder erreicht.

Die Druckschrift DE 31 30 182 A1 betrifft einen Aufzeichnungsträger, insbesondere Wertpapier, bei dem eine Bildinformation durch Verdickungen und Verjüngungen einer guillochenartigen Rasterstruktur von besonders hohem Schutzwert wiedergegeben wird.

Gegenstand der Druckschrift EP 0 536 625 A1 ist ein Verfahren zur Strukturierung von Werkstückoberflächen mit einem Laserstrahl, der durch eine Steuereinheit längs einer durch Spurpunkte vorgegebenen Spurlinie auf der zu bearbeitenden Werkstückoberfläche geführt wird.

Die Druckschrift WO 94/18609 A1 betrifft ein Verfahren zur gleichzeitigen Replikation und direkten Applikation von Hologrammen und anderen Beugungsgittern auf verschiedene Bedruckstoffe, insbesondere Papier oder Karton.

Die Druckschrift WO 99/59036 A1 betrifft eine holografische Sicherheitsvorrichtung mit einer ersten und zweiten ein holographisches Bild erzeugenden Mikrostruktur, welche in jeweiligen Gruppen von im Wesentlichen nichtüberlappenden Bereichen eines Aufzeichnungsmediums aufgezeichnet wurden.

Die Druckschrift GB 2 136 352 A betrifft eine Hologrammvorrichtung für Sicherheits- oder Identifikationsanwendungen, die aus einer Mehrzahl von Transparentfolien hergestellt wurde, um ein komplexes dreidimensionales Bild darzustellen.

Davon ausgehend liegt der Erfindung die Aufgabe zugrunde, Gitterbilder der eingangs genannten Art weiter zu verbessern, und unter Beibehaltung der bisherigen Vorteile Gitterbilder mit neuen optischen Effekten zu schaffen und/oder die Fälschungssicherheit der Gitterbilder weiter zu erhöhen.

Diese Aufgabe wird durch das Gitterbild mit den Merkmalen des Hauptanspruchs gelöst. Ein Herstellungsverfahren sowie ein Sicherheitselement, ein Sicherheitspapier und ein Datenträger mit derartigen Gitterbildern sind in den nebengeordneten Ansprüchen angegeben. Weiterebildungen der Erfindung sind Gegenstand der Unteransprüche.

Die Erfindung baut auf dem Stand der Technik dadurch auf, dass ein mit bloßem Auge separat erkennbares Gitterfeld des Gitterbilds ein elektromagnetische Strahlung beeinflussendes Gittermuster mit Strichgitterlinien enthält, für die zumindest einer der charakteristischen Parameter Orientierung und Krümmung über der Fläche des Gitterfelds variiert. Bevorzugt enthält das genannte Gitterfeld dabei ein elektromagnetische Strahlung beeinflussendes Gittermuster aus nicht unterbrochenen Strichgitterlinien.

Im Rahmen der vorliegenden Beschreibung wird unter Beugung oder Diffraktion die Abweichung von der geradlinigen Ausbreitung des Lichts verstanden, die nicht durch Brechung, Reflexion oder Streuung hervorgerufen wird, sondern die auftritt, wenn Licht auf Hindernisse wie Spalte, Blenden oder Kanten trifft. Beugung ist eine typische Wellenerscheinung und daher stark wellenlängenabhängig und stets mit Interferenz verbunden. Sie ist insbesondere von den Vorgängen der Reflexion und der Brechung zu unterscheiden, die sich bereits mit dem Bild geometrischer Lichtstrahlen zutreffend beschreiben lassen. Hat man es mit Beugung an sehr vielen, statistisch verteilten Objekten zu tun, hat es sich eingebürgert, statt von Beugung an unregelmäßig verteilten Objekten von Streuung zu sprechen.

Unter Streuung versteht man die Ablenkung eines Teils einer gebündelten Wellerestrahlung aus seiner ursprünglichen Richtung beim Durchgang durch Materie aufgrund der Wechselwirkung mit einem oder mehreren Streuzentren. Die diffus in alle Raumrichtungen gestreute Strahlung bzw. die Gesamtheit der von den Streuzentren ausgehenden Streuwellen geht der primären Strahlung verloren. Streuung von Licht an Objekten mit einer Größenordnung im Bereich der Lichtwellenlänge und darunter ist in der Regel ebenfalls wellenlängenabhängig, wie beispielsweise die Rayleigh-Streuung oder die Mie-Streuung. Ab einer Objektgröße, die die zehnfache Wellenlänge überschreitet, spricht man gewöhnlich von nicht-selektiver Streuung, bei der alle Wellenlängen in etwa gleich beeinflusst werden.

Nicht-selektive Streuung kann jedoch auch mit kleineren Objekten erreicht werden, wenn die Objekte nur eine unregelmäßige Verteilung und eine geeignete Bandbreite von Objektgrößen aufweisen, da sich dann die wellenlängenabhängigen Eigenschaften der einzelnen Objekte über das gesamte Ensemble herausmitteln.

Da die charakteristischen Parameter von Gittermustern grundsätzlich sowohl eine regelmäßige, kontinuierliche, als auch eine zufällige, sprunghafte Variation aufweisen können, lassen sich sowohl Effekte, die gewöhnlich mit Beugungsvorgängen, als auch Effekte, die gewöhnlich mit Streuvorgängen beschrieben werden, erzeugen. Die elektromagnetische Strahlung beeinflussenden Gittermuster der vorliegenden Erfindung sind Gittermuster, die eine zufällige, sprunghafte Variation aufweisen, die Effekte erzeugen, die gewöhnlich mit Streuvorgängen beschrieben werden.

**Hauptantrag- zusätzliche Änderungen der Beschreibung**

Nach der Erfindung weist der oder die variierenden charakteristischen Parameter über die Fläche des Gitterfelds eine zufällige und sprunghafte Variation auf. Bei dem selbst nicht erfindungsgemäßen Parameter Beabstandung kann der Abstand der i-ten und (i+1)-ten Gitterlinie eines elektromagnetische Strahlung beeinflussenden Gittermusters durch die Beziehung

$$\mathrm{drand}(i,i+1) = \mathrm{dmin} + (\mathrm{dmax} - \mathrm{dmin}) \ * \mathrm{Rand}()$$

gegeben sein, wobei dmin und dmax wieder den minimalen bzw. maximalen Gitterlinienabstand und Rand() eine Zufallszahl oder geeignete erzeugte Pseudozufallszahl aus dem Intervall [0,1] darstellen. Der Abstand der Gitterlinien springt dann von Gitterlinie zu Gitterlinie willkürlich zwischen zufälligen Werten aus dem Intervall [dmin, dmax].

Der Bereich der Gitterlinienabstände liegt vorzugsweise zwischen etwa einem Zehntel und etwa dem Zehnfachen der Wellenlänge, für die das Gitterbild ausgelegt ist. Bei Gitterbildern, die für Betrachtung bei weißem Licht bestimmt, kann als Auslegungwellenlänge $\lambda$ = 550 nm verwendet werden. Besonders bevorzugt sind Gitterlinenabstände, die zwischen etwa der Hälfte und etwa dem Doppelten der Auslegungswellenlänge liegen.

In einer Weiterbildung der Erfindung enthält das genannte Gitterfeld ein weiteres elektromagnetische Strahlung beeinflussendes Gittermuster mit Strichgitterlinien, für die zumindest einer der charakteristischen Parameter Orientierung, Krümmung, Beabstandung und Profilierung über der Fläche des Gitterfelds variiert. Bevorzugt weisen die beiden elektromagnetische Strahlung beeinflussenden Gittermuster eine Variation in denselben Parametern auf. Die Strichgitterlinien der beiden elektromagnetische Strahlung beeinflussenden Gittermuster unterscheiden sich zweckmäßig durch einen nicht variierenden charakteristischen Parameter, insbesondere durch die Orientierung der Strichgitterlinien voneinander.

Erfindungsgemäß ist bei den beiden elektromagnetische Strahlung beeinflussenden Gittermustern jeweils die Beabstandung oder Krümmung zufällig variiert, und die Orientierung des zweiten elektromagnetische Strahlung beeinflussenden Gittermuster um einen bestimmten Winkel, etwa 90°, gegen die Orientierung des ersten elektromagnetische Strahlung beeinflussenden Gittermusters gedreht sein. Es versteht sich, dass das Gitterfeld auch mehr als zwei überlagerte elektromagnetische Strahlung beeinflussende Gittermuster enthalten kann.

Das genannte Gitterfeld bildet eine Mattstruktur, die bei der Betrachtung keine diffraktiven Effekte zeigt. Dadurch können Flächenbereiche mit mattem Erscheinungsbild einfach in ein elektronenstrahllithographisch erzeugtes Gitterbild integriert werden. In einer zweckmäßigen Ausgestaltung sind die charakteristischen Parameter der Strichgitterlinien so variiert, dass die Mattstruktur keinerlei Farbigkeit zeigt. Der mit der Mattstruktur belegte Flächenbereich des Gitterbilds erscheint dann beispielsweise als metallischer, matter Bereich. In einer Weiterbildung dieser Ausführungsform weisen die Gitterbilder mit Mattstruktur unterschiedliche optische Helligkeit auf. In einer bevorzugten Variante lassen sich über die unterschiedlichen Helligkeiten Mattstrukturhalbtonbilder erzeugen, die insbesondere für die Darstellung von Portraits geeignet sind. Darüber hinaus kann durch genaue Einstellung der Helligkeit einzelner oder mehrerer Mattstrukturbereiche eine maschinenlesbare, optisch nicht erkennbare Kennzeichnung im Gitterbild erzeugt werden.

In allen beschriebenen Gitterbildern sind die Strichgitterlinien mit Vorteil elektronenstrahllithographisch erzeugt. Diese Technik ermöglicht es, Gitterbilder herzustellen, bei denen jede einzelne Gitterlinie durch die Parameter Orientierung, Krümmung, Beabstandung und Profilierung eindeutig bestimmt werden kann.

Es hat sich als zweckmäßig herausgestellt, wenn die Strichgitterlinien eine Linienprofiltiefe zwischen etwa 100 nm und etwa 400 nm aufweisen. Das Gitterbild selbst ist vorzugsweise mit einem reflektierenden oder hochbrechenden Material beschichtet. Als reflektierende Materialien kommen alle Metalle und viele Metalllegierungen in Betracht. Beispiele für geeignete hochbrechende Materialien sind $CaS$, $CrO_2$, $ZnS$, $TiO_2$ oder $SiO_x$. Vorteilhaft besteht ein signifikanter Unterschied in den Brechungsindizes des Mediums, in das das Gitterbild eingebracht ist, und des hochbrechenden Materials, vorzugsweise ist die Differenz sogar größer als 0,5. Das Gitterbild kann in eingebetteter oder nicht eingebetteter Ausgestaltung erzeugt werden. Zur Einbettung eignen sich beispielsweise PVC, PET, Polyester oder eine UV-Lackschicht.

Die erfindungsgemäße Gestaltung der Gitterbilder ermöglicht neben neuartigen optischen Effekten auch eine eindeutig maschinenlesbare, optisch jedoch nicht sichtbare Kennzeichnung von hologrammartigen Gitterbildern. Beispielsweise können die Gitterbilder mit digitalen Wasserzeichen versehen werden. Die Fälschungssicherheit solcher Gitterbilder kann so deutlich erhöht werden.

Die Erfindung umfasst auch Verfahren zum Herstellen von Gitterbildern, sowie ein Sicherheitselement mit einem Gitterbild der oben beschriebenen Art. Das Sicherheitselement kann insbesondere ein Sicherheitsfaden, ein Etikett oder ein Transferelement sein. Die Erfindung umfasst ferner ein Sicherheitspapier mit einem solchen Sicherheitselement sowie einen Datenträger, der mit einem Gitterbild, einem Sicherheitselement oder einem Sicherheitspapier der beschriebenen Art ausgestattet ist. Bei dem Datenträger kann es sich insbesondere um eine Banknote, ein Wertdokument, einen Pass, eine Ausweiskarte oder eine Urkunde handeln.

In einer weiteren Ausführungsform kann das erfindungsgemäße Gitterbild, mit einem farbkippenden Dünnschichtaufbau kombiniert werden. Dabei kann die Gesamtfläche des Gitterbildes oder auch nur eine Teilfläche des Gitterbildes mit dem Dünnschichtaufbau versehen werden. Der Dünnschichtaufbau kann je nach Anwendung opak oder auch semitransparent ausgeführt werden und umfasst mindestens drei Schichten. Beispielsweise kann der Schichtaufbau eine Reflexionsschicht, eine Absorberschicht und eine zwischen diesen beiden Schichten liegende Dielektrikumsschicht umfassen. Bei der Reflexionsschicht handelt es sich üblicherweise um eine Metallschicht, z.B. aus Aluminium. Alternativ besteht der Dünnschichtaufbau aus zwei Absorberschichten und einer zwischen den Absorberschichten liegenden Dielektrikumsschicht. Es ist auch denkbar, dass mehrere Absorber- und Dielektrikumsschichten alternierend vorliegen oder auch ausschließlich Dielektrikumsschichten vorgesehen sind, wobei aneinander grenzende Schichten stark unterschiedliche Brechungsindices besitzen, damit ein Farbkippeffekt erzeugt wird.

Als Absorberschichten dienen typischerweise Metallschichten aus Materialien, wie Chrom, Eisen, Gold, Aluminium oder Titan, in einer Dicke von vorzugsweise 4 nm bis 20 nm. Als Absorberschichtmaterialien können auch Verbindungen, wie Nickel-Chrom-Eisen, oder seltenere Metalle, wie Vanadium, Palladium oder Molybdän, verwendet werden. Weitere geeignete Materialien sind z.B. Nickel, Cobalt, Wolfram, Niobium, Aluminium, Metallverbindungen, wie Metallfluoride, -oxide, -sulfide, -nitride, -carbide, -phosphide, -selenide, -silicide und Verbindungen davon, aber auch Kohlenstoff, Germanium, Cermet und Eisenoxid. Die Absorberschichten können identisch sein, können aber auch unterschiedlich dick sein und/oder aus unterschiedlichem Material bestehen.

Für die Dielektrikumsschicht kommen hauptsächlich transparente Materialien mit einem niedrigen Brechungsindex < 1,7 in Betracht, wie beispielsweise $SiO_2$, $MgF$, $SiOx$ mit $1 < x < 2$ und $Al_2O_3$. Grundsätzlich kommen fast alle aufdampfbaren, durchsichtigen Verbindungen infrage, insbesondere also auch höher brechende Beschichtungsmaterialien, wie $ZrO_2$, $ZnS$, $TiO_2$ und Indiumzinnoxide (ITO). Die Schichtdicke der Dielektrikumsschicht D liegt im Bereich von 100 nm bis 1000 nm, bevorzugt 200 nm bis 500 nm.

Unterschiedlichste Bedampfungsverfahren sind zur Erzeugung der Schichten geeignet. Eine methodische Gruppe bildet Physical Vapor Deposition (PVD) mit Schiffchenbedampfung, Bedampfung durch Widerstandsheizung, Bedampfung durch Induktionsheizung oder auch Elektronenstrahlbedampfung, Sputtern (DC oder AC) und Lichtbogenbedampfung. Andererseits kann die Bedampfung auch als Chemical Vapor Deposition (CVD) erfolgen, wie z.B. Sputter im reaktiven Plasma oder jede andere plasmaunterstützte Bedampfungsart. Es besteht grundsätzlich auch die die Möglichkeit, Dielektrikumsschichten aufzudrucken.

Die Kombination von Mattstrukturen und farbkippenden Dünnschichtaufbauten ist sehr schwer zu fälschen, da die Technologien zur Herstellung dieser Elemente äußerst schwer zu beschaffen sind. Darüber hinaus kann das Design der Mattstruktur und des Dünnschichtaufbaus aufeinander genau abgestimmt werden, so dass völlig neuartige optische Effekte erzielt werden können.

Weitere Ausführungsbeispiele sowie Vorteile der Erfindung werden nachfolgend anhand der Figuren erläutert. Zur besseren Anschaulichkeit ist in den Figuren auf eine maßstabs- und proportionsgetreue Darstellung verzichtet.

Es zeigen:

Fig. 1       eine schematische Darstellung einer Banknote mit eingebettetem Sicherheitsfaden und aufgeklebtem Transferelement, jeweils nach einem Ausführungsbeispiel der Erfindung,

Fig. 2       in (a) ein Gitterbild mit drei Gitterfeldern in schematischer Darstellung, wobei in (b) die Belegung der Gitterfelder mit verschiedenen elektromagnetische Strahlung beeinflussenden Gittermustern angedeutet ist,

Fig. 3       in (a) und (b) je eine Detailaufsicht auf ein Gitterfeld mit einem elektromagnetische Strahlung beeinflussenden Gittermuster, für dessen Strichgitterlinien der Parameter Beabstandung über der Fläche des Gitterfelds kontinuierlich variiert,

Fig. 4       in (a) und (b) je eine Detailaufsicht auf ein Gitterfeld mit einem elektromagnetische Strahlung beeinflussenden Gittermuster, für dessen Strichgitterlinien der Parameter Krümmung über der Fläche des Gitterfelds kontinuierlich variiert,

Fig. 5       in (a) und (b) je eine Detailaufsicht auf ein Gitterfeld mit einem elektromagnetische Strahlung beeinflussenden Gittermuster, für dessen Strichgitterlinien der Parameter Orientierung über der Fläche des Gitterfelds kontinuierlich variiert,

Fig. 6       in (a) und (b) je eine Detailaufsicht auf ein Gitterfeld mit einem elektromagnetische Strahlung beeinflussenden Gittermuster, für deren Strichgitterlinien der Parameter Beabstandung zufällig und sprunghaft variiert,

Fig. 7 und 8   jeweils Detailaufsichten auf erfindungsgemäße Gitterfelder mit elektromagnetische Strahlung beeinflussenden Gittermustern, für deren Strichgitterlinien einer der charakteristischen Parameter Krümmung (Fig. 7) bzw. Orientierung (Fig. 8) zufällig und sprunghaft variiert,

Fig. 9       zwei Detailaufsichten auf den Übergang zwischen zwei aneinander grenzenden Gitterfeldern, wobei in (a) ein herkömmlicher diskontinuierlicher Übergang und in (b) ein kontinuierlicher Übergang gezeigt ist,

Fig. 10      eine Aufsicht auf ein Sicherheitselement mit Dünnschichtaufbau, und

Fig.11       einen Querschnitt durch ein Sicherheitselement mit Dünnschichtaufbau.

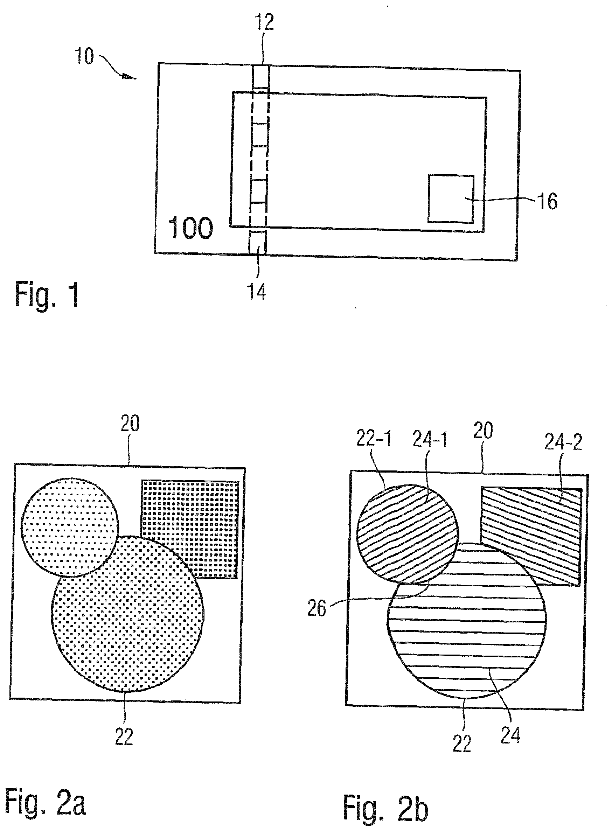

Fig. 1 zeigt eine schematische Darstellung einer Banknote 10, die zwei erfindungsgemäße Sicherheitselemente aufweist, nämlich einen Sicherheitsfaden 12 und ein aufgeklebtes Transferelement 16. Der Sicherheitsfaden 12 ist als Fenstersicherheitsfaden ausgebildet, der an bestimmten Fensterbereichen 14 an der Oberfläche der Banknote 10 hervortritt, während er in den dazwischen liegenden Bereichen im Inneren der Banknote 10 eingebettet ist. Beide Sicherheitselemente 12,16 sind mit Gitterbildern der nachfolgend beschriebenen Art ausgestattet.

Die allgemeine Gestalt eines hologrammartigen Gitterbilds ist in der Fig. 2 dargestellt. Mit Bezug auf Fig. 2(a) enthält ein hologrammartiges Gitterbild 20 mehrere Gitterfelder 22 mit unterschiedlichen elektromagnetische Strahlung beeinflussenden Gittermustern. Die elektromagnetische Strahlung beeinflussenden Gittermuster sind üblicherweise Strichgitter 24 mit einer Vielzahl nebeneinander liegender, gleichartiger paralleler Gitterlinien, wie in Fig. 2(b) schematisch gezeigt. Die Abmessung und Abstände der Gitterlinien sind dabei zur Illustration stark übertrieben gezeichnet. Tatsächlich liegt die Gitterkonstante der Gittermuster erfindungsgemäßer Gitterbilder typischerweise im Bereich von etwa 0,4 $\mu$m bis etwa 2 $\mu$m, so dass eine entsprechend große Anzahl an Gitterlinien erforderlich ist, um Gitterfelder mit Abmessung von einigen Millimetern oder einigen Zentimetern zu erzeugen.

Die Strichgitterlinien 24 jedes elektromagnetische Strahlung beeinflussenden Gittermusters können durch vier charakteristische Parameter, nämlich durch ihre Orientierung, Krümmung, Beabstandung und die Profilierung der einzelnen Linien, beschrieben werden. An der Grenzlinie 26 zwischen zwei aneinander grenzenden Gitterfeldern ergibt sich üblicherweise eine Diskontinuität im Bezug auf zumindest einen der genannten Parameter. Beispielsweise sind die Strichgitterlinien 24 und 24-1 der Gitterfelder 22 und 22-1 beide gerade und mit sinoidaler Profilierung (in Fig. 2(b) nicht sichtbar) ausgebildet, unterscheiden sich also in den Parametern Krümmung und Profilierung nicht. Dagegen unterscheiden sie sich sowohl in ihrer Orientierung als auch in ihrer Beabstandung deutlich.

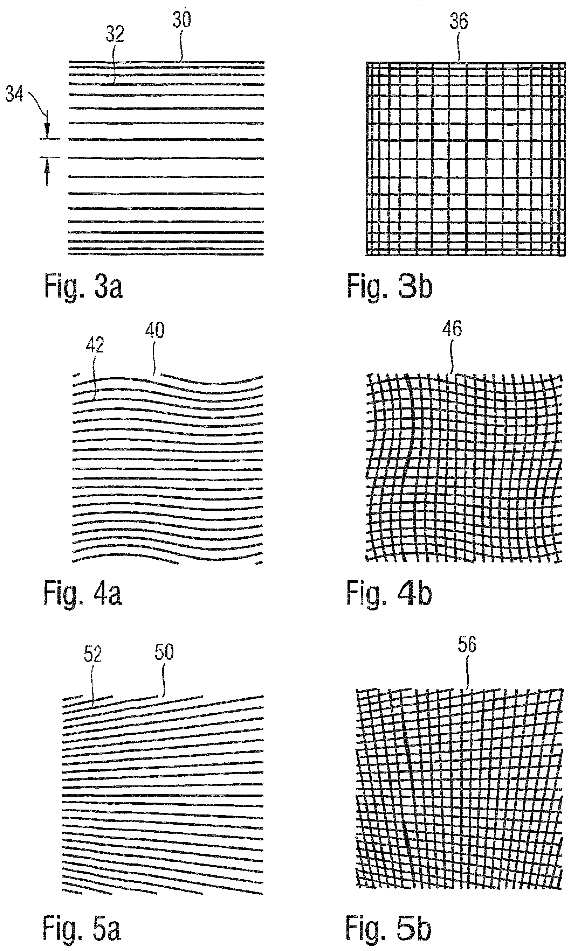

Die Figuren 3 bis 8 zeigen schematisch stark vergrößerte Ausschnitte aus einem Gitterfeld, um die Anordnung der einzelnen Gitterlinien zueinander erläutern zu können. Gemäß der Erfindung ist das gesamte Gitterfeld mit derartigen nicht unterbrochenen Strichgitterlinien belegt.

Fig. 3(a) zeigt eine Detailaufsicht auf ein Gitterfeld 30 mit einem elektromagnetische Strahlung beeinflussenden Gittermuster, für dessen Strichgitterlinien 32 der Parameter Beabstandung über der Fläche des Gitterfelds 30 kontinuierlich variiert. Das gesamte Gitterfeld 30 ist dabei so großflächig ausgebildet, dass es mit bloßem Auge separat erkennbar ist.

Wie aus Fig. 3(a) deutlich zu erkennen, nimmt der Abstand 34 der einzelnen Gitterlinien von der Bildunterseite zur Oberseite zunächst kontinuierlich zu und anschließend kontinuierlich wieder ab. Es versteht sich, dass die gezeigte horizontale Orientierung der Strichgitterlinien 32 keine Beschränkung darstellt und dass beliebige Vorzugsrichtungen der Strichgitterlinien 32 möglich sind.

In Fig. 3(b) ist eine Detailaufsicht auf ein Gitterfeld 36 gezeigt, dessen Gitterlinienstruktur aus zwei um 90° gegeneinander gedrehte elektromagnetische Strahlung beeinflussende Gittermuster vom in Fig. 3(a) gezeigten Typ besteht. Dies kann beispielsweise durch aufeinander folgendes Belichten zweier Gitter nach Fig. 3(a) erreicht werden.

Als weiteres illustrierendes Beispiel zeigt Fig. 4(a) eine Detailaufsicht auf ein Gitterfeld 40 mit einem elektromagnetische Strahlung beeinflussenden Gittermuster, für dessen Strichgitterlinien 42 der Parameter Krümmung über der Fläche des Gitterfelds 40 kontinuierlich variiert. Von der Unterkante des gezeigten Ausschnitts ausgehend, nimmt die Krümmung der einzelnen Gitterlinien zunächst kontinuierlich ab, bis in der Bildmitte eine gerade Gitterlinie ohne Krümmung erreicht ist. Dann nimmt die Krümmung zur Bildoberkante kontinuierlich zu.

Auch das Gitterfeld 40 ist, wie die nachfolgend in den Figuren 5 bis 8 dargestellten Gitterfelder 50, 60, 70 und 80, so großflächig ausgebildet, dass es mit bloßem Auge separat erkennbar ist. Ebenso soll die jeweils gezeigte Vorzugsorientierung der Strichgitterlinien keine Beschränkung darstellen, vielmehr soll klar sein, dass beliebige Vorzugsorientierungen der Strichgitterlinien möglich sind.

Fig. 4(b) zeigt eine Detailaufsicht auf ein Gitterfeld 46, dessen Gitterlinienstruktur aus zwei um 90° gegeneinander gedrehte elektromagnetische Strahlung beeinflussende Gittermuster vom in Fig. 4(a) gezeigten Typ besteht, was beispielsweise durch aufeinander folgendes Belichten zweier Gitter nach Fig. 4(a) erreicht werden kann.

Bei dem illustrierenden Beispiel der Fig. 5(a) weist das Gitterfeld 50 ein elektromagnetische Strahlung beeinflussendes Gittermuster auf, für dessen Strichgitterlinien 52 der Parameter Orientierung über der Fläche des Gitterfelds 50 kontinuierlich variiert. Von der Unterkante des gezeigten Ausschnitts ausgehend, dreht sich die Orientierung der einzelnen Gitterlinien kontinuierlich gegen den Uhrzeigersinn. Außerhalb des dargestellten Bereichs kann sich diese Drehung fortsetzen und/oder durch eine Drehung im Uhrzeigersinn ergänzt werden.

Die Detailaufsicht der Fig. 5(b) zeigt ein Gitterfeld 56, dessen Gitterlinienstruktur aus zwei um 90° gegeneinander gedrehte, elektromagnetische Strahlung beeinflussende Gittermuster vom in Fig. 5(a) gezeigten Typ besteht, was wiederum durch aufeinander folgendes Belichten zweier Gitter nach Fig. 5(a) erreicht werden kann.

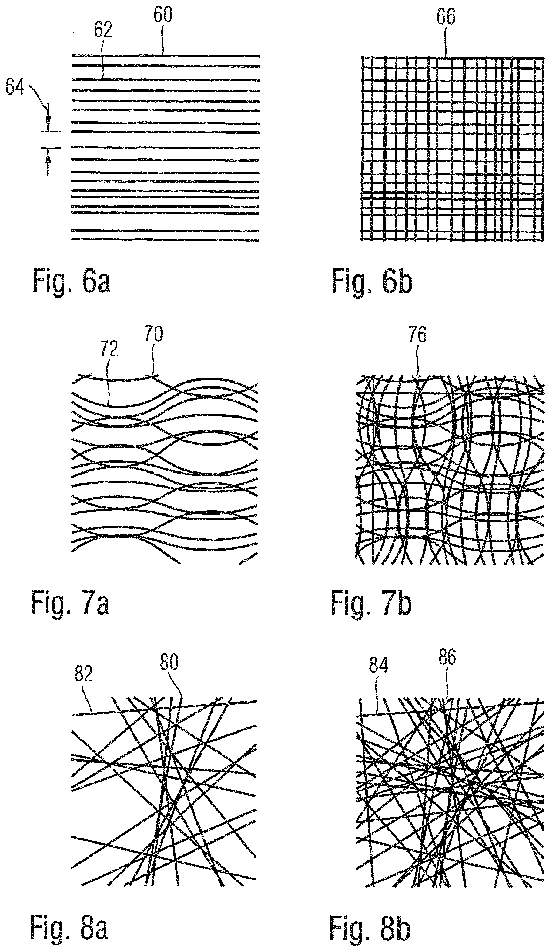

Fig. 6(a) zeigt ein nicht erfindungsgemäßes Beispiel, bei dem das Gitterfeld 60 ein elektromagnetische Strahlung beeinflussendes Gittermuster aufweist, für dessen Strichgitterlinien 62, wie bei der Fig. 3(a), der Parameter Beabstandung über der Fläche des Gitterfelds 60 variiert. Im Gegensatz zu dem Gitterfeld der Fig. 3(a) variiert der Abstand 64 der einzelnen Gitterlinien jedoch nicht kontinuierlich, sondern zufällig und sprunghaft, wie aus Fig. 6(a) deutlich zu erkennen ist. Die zufällige Variation setzt sich außerhalb des gezeigten Ausschnitts über die ganze Fläche des Gitterfelds 60 fort.

Fig. 6(b) zeigt eine Detailaufsicht auf ein Gitterfeld 66, dessen Gitterlinienstruktur aus zwei um 90° gegeneinander gedrehte, elektromagnetische Strahlung beeinflussende Gittermuster vom in Fig. 6(a) gezeigten Typ besteht, was durch aufeinander folgendes Belichten zweier Gitter nach Fig. 6(a) erreicht werden kann.

Bei dem Ausführungsbeispiel der Fig. 7(a) weist das Gitterfeld 70 ein elektromagnetische Strahlung beeinflussendes Gittermuster auf, für dessen Strichgitterlinien 72, wie bei der Fig. 4(a), der Parameter Krümmung über der Fläche des Gitterfelds 70 variiert. Im Gegensatz zu dem Gitterfeld der Fig. 4(a) variiert die Krümmung der einzelnen Gitterlinien jedoch nicht kontinuierlich, sondern zufällig und sprunghaft, wie aus Fig. 7(a) deutlich zu erkennen ist. Die zufällige Variation setzt sich außerhalb des gezeigten Ausschnitts über die ganze Fläche des Gitterfelds 70 fort.

Die Detailaufsicht der Fig. 7(b) zeigt ein Gitterfeld 76, dessen Gitterlinienstruktur aus zwei um 90° gegeneinander gedrehte, elektromagnetische Strahlung beeinflussende Gittermuster vom in Fig. 7(a) gezeigten Typ besteht, was etwa durch aufeinander folgendes Belichten zweier Gitter nach Fig. 7(a) erreicht werden kann.

Fig. 8(a) zeigt als weiteres Ausführungsbeispiel ein Gitterfeld 80 mit einem elektromagnetische Strahlung beeinflussenden Gittermuster, dessen Strichgitterlinien 82 völlig zufällig zueinander orientiert sind, so dass der Parameter Orientierung über der Fläche des Gitterfelds 80 zufällig und sprunghaft variiert. Die zufällige Variation setzt sich außerhalb des gezeigten Ausschnitts über die ganze Fläche des Gitterfelds 80 fort. Ein derartiges elektromagnetische Strahlung beeinflussendes Gittermuster erzeugt eine Mattstruktur, die in einer beispielsweise gerichtet beugenden Umgebung zu erkennen ist. Fig. 8(b) zeigt ebenfalls ein Gitterfeld 86 mit völlig zufällig zueinander orientierten Strichgitterlinien 84. Die Strichgitterlinien in Fig. 8(a) füllen die gezeigte Fläche weniger stark als die in Fig. 8(b) gezeigte Fläche gleicher geometrischer Größe. Dies führt dazu, dass das Gitterfeld in Fig. 8(a) einen weniger stark ausgeprägten Mattstruktureffekt als das Gitterfeld in Fig. 8(b) aufweist. Das Gitterfeld in Fig. 8(a) erscheint deshalb für einen Beobachter dunkler als das Gitterfeld in Fig. 8(b).

Lässt sich, wie bei dieser speziellen Ausführungsform, ein Zusammenhang zwischen Helligkeit der mit elektromagnetische Strahlung beeinflussenden Gittern bedeckten Fläche und geeigneten geometrischen Parametern herstellen, so kann sogar die relative Helligkeit der entsprechenden Flächenbereiche gezielt variiert werden. Die Gitterstruktur in Fig. 8(a) besitzt beispielsweise eine quantifizierbar größere, mittlere geometrische Maschenweite als die Gitterstruktur in Fig. 8(b).

Neben der in den Figuren 3 bis 8 illustrierten Variation in den Parametern Orientierung, Krümmung und Beabstandung der Strichgitterlinien kann auch die Profilierung der Gitterlinien variiert werden. Beispielsweise kann das Linienprofil über die Fläche des Gitterfelds mehrfach kontinuierlich von einer sinoidalen zu einer zinnenartigen Form und zurück zur sinoidalen Form geändert werden. Auch kann die Höhe und/oder die Symmetrie der Linienprofile variiert werden. Neben der kontinuierlichen Veränderung kann die Form der Linienprofile zwischen benachbarten Gitterlinien auch zufällig und sprunghaft variieren.

Es versteht sich weiter, dass nicht nur einer der charakteristischen Parameter über die Fläche des Gitterfelds variiert werden kann, sondern auch mehrere Parameter gleichzeitig. Beispielsweise können die Strichgitterlinien in einem Gitterfeld zugleich in den Parametern Beabstandung, Orientierung und Profilierung variieren.

Alle beschriebenen elektromagnetische Strahlung beeinflussenden Gittermuster lassen sich mittels Elektronenstrahllithographie erzeugen. Diese Technik ermöglicht es, Gitterbilder herzustellen, bei denen im Extremfall jede einzelne Linie eines Strichgitters durch die genannten charakteristischen Parameter eindeutig bestimmt werden kann.

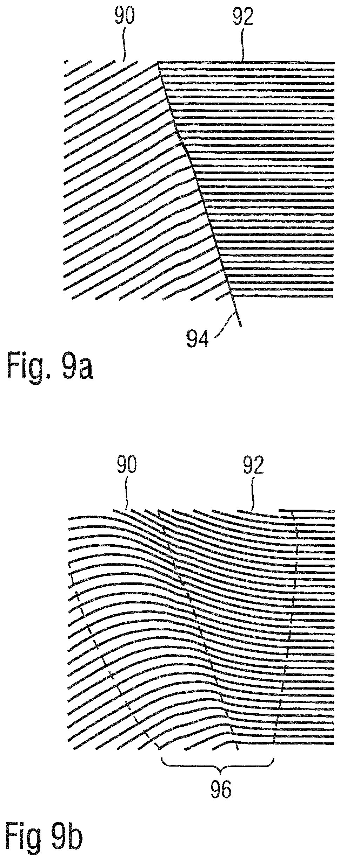

Während die Figuren 3 bis 8 die großflächige Belegung ganzer Gitterfelder mit einem elektromagnetische Strahlung beeinflussenden Gittermuster illustrieren, zeigt Fig. 9 eine Detailaufsicht auf den Übergang zwischen zwei aneinander grenzenden Gitterfeldern 90 und 92. Fig. 9(a) zeigt dabei den typischen Verlauf der Gitterlinien an der Grenzlinie 94 zweier Gitterfelder, wie sie sich bei Herstellung des Gitterbildes mittels optischer Direktbelichtung oder Dot-Matrix-Systemen ergibt.

Das elektromagnetische Strahlung beeinflussende Gittermuster des ersten Gitterfelds 90 wird sich im Allgemeinen in einem oder mehreren der charakteristischen Parameter von dem elektromagnetische Strahlung beeinflussenden Gittermuster des zweiten Gitterfelds 92 unterscheiden. Im Beispiel der Fig. 9(a) unterscheidet sich das elektromagnetische Strahlung beeinflussende Gittermuster des ersten Gitterfelds 90 in den Parametern Beabstandung und Orientierung deutlich von dem elektromagnetische Strahlung beeinflussenden Gittermuster des zweiten Gitterfelds 92. Entlang der Grenzlinie 94 treten somit Diskontinuitäten auf, die das optische Erscheinungsbild des Gitterbilds bei der Betrachtung stören.

Zur Abhilfe ist zwischen dem ersten Gitterfeld 90 und dem zweiten Gitterfeld 92 einen Übergangsbereich 96 vor gesehen, in dem die charakteristischen Parameter der Strichgitterlinien des ersten Gitterfelds kontinuierlich in die charakteristischen Parameter der Strichgitterlinien des zweiten Gitterfelds übergehen. Derartige weiche Übergänge können ohne Unterbrechung der Strichgitterlinien mit Elektronenstrahllithographie in vergleichsweise einfacher Weise realisiert werden.

Bezüglich der Längenskala, auf der der Übergang erfolgt, bestehen für den Designer zwei Möglichkeiten. Lässt man den Übergang zwischen den elektromagnetische Strahlung beeinflussende Gittermuster der beiden Gitterfelder auf einer Längenskala von etwa 100 μm oder weniger erfolgen, so kann der Betrachter den Übergangsbereich mit bloßem Auge nicht erfassen. Es werden somit lediglich die störenden optischen Artefakte an der Grenzlinie der beiden Gitterfelder beseitigt.

Lässt man andererseits den Übergang auf einer Längenskala von mehr als 100 μm erfolgen, so kann der Übergangsbereich vom Betrachter wahrgenommen werden. Dies kann ausgenutzt werden, um neuartige optische Effekte im Übergang zweier Gitterfelder zu erzeugen.

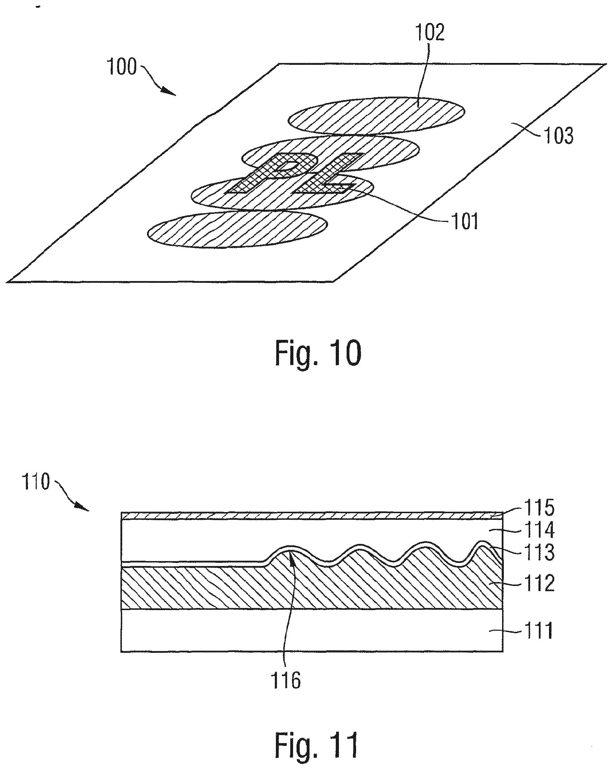

Fig. 10 zeigt ein Sicherheitselement 100 mit einem erfindungsgemäßen Gitterbild 101 und einem partiell aufgebrachten Dünnschichtaufbau 102. In der vorliegenden Ausführungsform wurde auf ein transparentes Folienmaterial 103 ein Lack aufgebracht, in den der Schriftzug "PL" als Gitterbild eingebracht wurde. Darüber wurde in Form von Kreisen ein Dünnschichtaufbau aufgedampft, der in diesem Fall aus einer Absorberschicht, einer dielektrischen Schicht und einer weiteren Absorberschicht besteht.

Fig. 11 zeigt ein weiteres Sicherheitselement 110, bei dem auf einer Trägerfolie 111 eine Lackschicht 112 aufgebracht wurde. In die Lackschicht wurde ein Gitterbild 116 partiell eingebracht. Darüber befindet sich eine Absorberschicht 113 sowie eine hochbrechende, dielektrische Schicht 114. Über dieser dielektrischen Schicht wurde eine reflektierende Schicht 115 aufgebracht. Die Schichten des Dünnschichtaufbaus wurden über Vakuum aufgedampft.

**Patentansprüche**

1. Sicherheitselement mit einem Gitterbild mit mehreren Gitterfeldern, die jeweils ein elektromagnetische Strahlung beeinflussendes Gittermuster aus einer Vielzahl von Strichgitterlinien enthalten, wobei die Strichgitterlinien durch die Parameter Orientierung, Krümmung, Beabstandung und Profilierung charakterisiert sind, wobei

   - ein mit bloßem Auge separat erkennbares Gitterfeld des Gitterbilds ein elektromagnetische Strahlung beeinflussendes Gittermuster mit Strichgitterlinien enthält,

   **dadurch gekennzeichnet, dass**
   für die Strichgitterlinien zumindest einer der charakteristischen Parameter Orientierung und Krümmung über der Fläche des Gitterfelds variiert,

   - das genannte Gitterfeld eine Mattstruktur bildet, die bei Betrachtung keine diffraktiven Effekte zeigt, und
   - der oder die variierenden charakteristischen Parameter über die Fläche des genannten Gitterfelds eine zufällige und sprunghafte Variation aufweisen.

2. Sicherheitselement nach Anspruch 1, **dadurch gekennzeichnet, dass** das genannte Gitterfeld ein elektromagnetische Strahlung beeinflussendes Gittermuster aus nicht unterbrochenen Strichgitterlinien enthält.

3. Sicherheitselement nach wenigstens einem der Ansprüche 1 bis 2, **dadurch gekennzeichnet, dass** das genannte Gitterfeld zumindest ein weiteres elektromagnetische Strahlung beeinflussendes Gittermuster mit Strichgitterlinien enthält, für die zumindest einer der charakteristischen Parameter Orientierung, Krümmung, Beabstandung und Profilierung über der Fläche des Gitterfelds variiert.

4. Sicherheitselement nach Anspruch 3, **dadurch gekennzeichnet, dass** die elektromagnetische Strahlung beeinflussenden Gittermuster eine Variation in denselben Parametern aufweisen.

5. Sicherheitselement nach Anspruch 3 oder 4, **dadurch gekennzeichnet, dass** sich die Strichgitterlinien der elektromagnetische Strahlung beeinflussenden Gittermuster durch einen nicht variierenden charakteristischen Parameter, insbesondere durch die Orientierung der Strichgitterlinien, voneinander unterscheiden.

6. Sicherheitselement nach wenigstens einem der Ansprüche 1 bis 5, **dadurch gekennzeichnet, dass** die Gitterfelder unterschiedliche optische Helligkeit aufweisen.

7. Sicherheitselement nach wenigstens einem der Ansprüche 1 bis 6, **dadurch gekennzeichnet, dass** die Strichgitterlinien eine Linienprofiltiefe zwischen etwa 100 nm und etwa 400 nm aufweisen.

8. Sicherheitselement nach wenigstens einem der Ansprüche 1 bis 7, **dadurch gekennzeichnet, dass** das Gitterbild mit einem reflektierenden oder hochbrechenden Material beschichtet ist.

9. Sicherheitselement nach wenigstens einem der Ansprüche 1 bis 8, **dadurch gekennzeichnet, dass** das Gitterbild eine maschinenlesbare, mit bloßem Auge nicht sichtbare Kennzeichnung enthält.

10. Sicherheitselement nach wenigstens einem der Ansprüche 1 bis 9, **dadurch gekennzeichnet, dass** das Gitterbild mit einem farbkippenden Dünnschichtaufbau kombiniert wird.

11. Sicherheitselement nach einem der Ansprüche 1 bis 10, **dadurch gekennzeichnet, dass** das Sicherheitselement ein Sicherheitsfaden, ein Etikett oder ein Transferelement ist.

12. Verfahren zum Herstellen eines Sicherheitselements mit einem Gitterbilds, bei dem in einem Substrat mehrere Gitterfelder erzeugt werden, die jeweils mit einem elektromagnetische Strahlung beeinflussenden Gittermuster aus einer Vielzahl von Strichgitterlinien gefüllt werden, wobei die Strichgitterlinien durch die Parameter Orientierung, Krümmung, Beabstandung und Profilierung charakterisiert sind, wobei

    - ein mit bloßem Auge separat erkennbares Gitterfeld des Gitterbilds mit einem elektromagnetische Strahlung beeinflussenden Gittermuster mit Strichgitterlinien gefüllt wird,

    **dadurch gekennzeichnet, dass**
    für die Strichgitterlinien zumindest einer der charakteristischen Parameter Orientierung und Krümmung über der Fläche des Gitterfelds variiert wird,

    - das genannte Gitterfeld eine Mattstruktur bildet, die bei Betrachtung keine diffraktiven Effekte zeigt, und
    - der oder die variierenden charakteristischen Parameter über die Fläche des Gitterfelds eine zufällige und sprunghafte Variation aufweisen.

13. Sicherheitspapier mit einem Sicherheitselement nach einem der Ansprüche 1 bis 11.

**14.** Datenträger mit einem Sicherheitselement nach einem der Ansprüche 1 bis 11 oder einem Sicherheitspapier nach Anspruch 13.

**15.** Datenträger nach Anspruch 14, **dadurch gekennzeichnet, dass** der Datenträger eine Banknote, ein Wertdokument, ein Pass, eine Ausweiskarte oder eine Urkunde ist.

**Claims**

**1.** A security element having a grating image having multiple grating fields, each of which includes an electromagnetic-radiation-influencing grating pattern comprising a plurality of grating lines, the grating lines being **characterized by** the parameters orientation, curvature, spacing and profile, wherein,

- in the grating image, a grating field that is separately perceptible with the naked eye includes an electromagnetic radiation-influencing grating pattern having grating lines,

**characterized in that**
for the grating lines at least one of the characteristic parameters orientation and curvature varies across the surface of the grating field,

- said grating field forms a matte pattern that displays no diffractive effects when viewed, and
- the varying characteristic parameter(s) exhibit a random and discontinuous variation across the surface of the grating field.

**2.** The security element according to claim 1, **characterized in that** said grating field includes an electromagnetic radiation-influencing grating pattern comprising uninterrupted grating lines.

**3.** The security element according to at least one of claims 1 to 2, **characterized in that** said grating field includes at least one further electromagnetic radiation-influencing grating pattern having grating lines for which at least one of the characteristic parameters orientation, curvature, spacing and profile varies across the surface of the grating field.

**4.** The security element according to claim 3, **characterized in that** the electromagnetic radiation-influencing grating patterns exhibit a variation in those same parameters.

**5.** The security element according to claim 3 or 4, **characterized in that** the grating lines of the electromagnetic radiation-influencing grating pattern differ from one another by a non-varying characteristic parameter, especially by the orientation of the grating lines.

**6.** The security element according to at least one of claims 1 to 5, **characterized in that** the grating fields exhibit different optical brightness.

**7.** The security element according to at least one of claims 1 to 6, **characterized in that** the grating lines exhibit a line profile depth between about 100 nm and about 400 nm.

**8.** The security element according to at least one of claims 1 to 7, **characterized in that** the grating image is coated with a reflecting or high-index material.

**9.** The security element according to at least one of claims 1 to 8, **characterized in that** the grating image includes a machine-readable identifier that is not visible with the naked eye.

**10.** The security element according to at least one of claims 1 to 9, **characterized in that** the grating image is combined with a color-shifting thin-film structure.

**11.** The security element according to at least one of claims 1 to 10, **characterized in that** the security element is a security thread, a label or a transfer element.

**12.** A method for manufacturing a security element having a grating image, in which are produced in a substrate multiple grating fields, each of which is filled with an electromagnetic radiation-influencing grating pattern comprising a plurality of grating lines, the grating lines being **characterized by** the parameters orientation, curvature, spacing and profile, wherein,

- in the grating image, a grating field that is separately perceptible with the naked eye is filled with an electromagnetic radiation-influencing grating pattern having grating lines,

**characterized in that**
for the grating lines at least one of the characteristic parameters orientation and curvature is varied across the surface of the grating field,

- said grating field forms a matte pattern that displays no diffractive effects when viewed, and
- the varying characteristic parameter(s) exhibit a random and discontinuous variation across the surface of the grating field.

**13.** A security paper having a security element according to one of claims 1 to 11.

**14.** A data carrier having a security element according to one of claims 1 to 11, or a security paper according to claim 13.

**15.** The data carrier according to claim 14, **characterized in that** the data carrier is a banknote, a value document, a passport, an identification card or a certificate.

## Revendications

**1.** Elément de sécurité comportant un motif à réseau diffractant comportant plusieurs champs de réseau, dont chacun contient un modèle de réseau, influant sur le rayonnement électromagnétique constitué d'un grand nombre de lignes de réseau de traits, les lignes du réseau de traits étant **caractérisées par** les paramètres orientation, courbure, écartement et profilage,

- un champ de réseau, pouvant être séparément reconnu à l'œil nu, du motif à réseau diffractant contentant un modèle de réseau, influant sur le rayonnement électromagnétique, comportant des lignes de traits de réseau,

**caractérisé en ce que**
pour les lignes de traits de réseau au moins l'un des paramètres caractéristiques orientation, courbure, espacement et profilage varie sur la surface du champ de réseaux,

- le champ de réseau mentionné forme une structure mate, qui quand on l'observe ne présente aucun effet diffractif, et
- le ou les paramètres caractéristiques variables présent sur la surface du champ de réseau mentionné une variation aléatoire et par saut.

**2.** Elément de sécurité selon la revendication 1, **caractérisé en ce que** le champ de réseau mentionné contient un modèle de réseau, influant sur le rayonnement électromagnétique, constitué de lignes de réseau de traits non interrompues.

**3.** Elément de sécurité diffractant selon l'une des revendications 1 à 2, **caractérisé en ce que** le champ de réseau mentionné contient au moins un modèle de réseau supplémentaire, influant sur le rayonnement électromagnétique, comportant des lignes de réseau de traits, pour lesquelles au moins l'un des paramètres caractéristiques orientation, courbure, espacement et profilage, varie sur la surface du champ de réseau.

**4.** Elément de sécurité selon la revendication 3, **caractérisé en ce que** les modèles de réseau influant sur le rayonnement électromagnétique présentent une variation au niveau des mêmes paramètres.

**5.** Elément de sécurité selon la revendication 3 ou 4, **caractérisé en ce que** les lignes du réseau de traits des modèles de réseau influant sur le rayonnement électromagnétique se distinguent les unes des autres par un paramètre caractéristique non variable, en particulier par l'orientation des lignes du réseau de traits.

**6.** Elément de sécurité selon au moins l'une des revendications 1 à 5, **caractérisé en ce que** les champs du réseau présentent des luminosités optiques différentes.

**7.** Elément de sécurité selon au moins l'une des revendications 1 à 6, **caractérisé en ce que** les lignes du réseau de traits présentent une profondeur du profil de lignes comprises entre environ 100 nm et environ 400 nm.

**8.** Elément de sécurité selon au moins l'une des revendications 1 à 7, **caractérisé en ce que** le motif à réseau diffractant est revêtu d'un matériau réfléchissant ou à grand indice de réfraction.

**9.** Elément de sécurité selon au moins l'une des revendications 1 à 8, **caractérisé en ce que** le motif à réseau diffractant contient une caractéristique lisible par une machine, non visible à l'oeil nu.

**10.** Elément de sécurité selon au moins l'une des revendications 1 à 9, **caractérisé en ce que** le motif à réseau diffractant est combiné à une structure de couches minces à effet goniochromatique.

**11.** Elément de sécurité selon l'une des revendications 1 à 10, **caractérisé en ce que** l'élément de sécurité est un fil de sécurité, une étiquette ou un élément de transfert.

**12.** Procédé de fabrication d'un élément de sécurité comportant un motif à réseau diffractant dans lequel, dans un substrat, plusieurs champs de réseau sont produits, dont chacun est rempli d'un modèle de réseau influant sur le rayonnement électromagnétique, constitué d'un grand nombre de lignes de réseau de traits, les lignes du réseau de traits étant **caractérisées par** les paramètres orientation, courbure, espacement et profilage, dans lequel

- on remplit un champ de réseau, pouvant être reconnu séparément à l'oeil nu, du motif à réseau diffractant avec un modèle de réseau influant sur le rayonnement électromagnétique, comportant des lignes de réseau de traits,

**caractérisé en ce que**
pour les lignes de réseau de traits on fait varier au moins l'un des paramètres caractéristiques orientation et courbure sur la surface du champ de réseau,

- le champ de réseau mentionné forme une structure mate, qui lors de son observation ne présente aucun effet diffractif, et
- le ou les paramètres caractéristiques variables présentent sur la surface du champ de réseau une variation aléatoire et par saut.

**13.** Papier de sécurité comportant un élément de sécurité selon l'une des revendications 1 à 11.

**14.** Support de données comportant un élément de sécurité selon au moins l'une des revendications 1 à 11, ou un papier de sécurité selon la revendication 13.

**15.** Support de données selon la revendication 14, **caractérisé en ce que** le support de données est un billet de banque, un document de valeur, un passeport, une carte d'identité ou un certificat.

Fig. 1

Fig. 2a

Fig. 2b

Fig. 3a

Fig. 3b

Fig. 4a

Fig. 4b

Fig. 5a

Fig. 5b

Fig. 6a

Fig. 6b

Fig. 7a

Fig. 7b

Fig. 8a

Fig. 8b

90    92

94

Fig. 9a

90    92

96

Fig 9b

Fig. 10

Fig. 11

**IN DER BESCHREIBUNG AUFGEFÜHRTE DOKUMENTE**

**In der Beschreibung aufgeführte Patentdokumente**

- DE 10226115 A1
- DE 3130182 A1
- EP 0536625 A1
- WO 9418609 A1
- WO 9959036 A1
- GB 2136352 A